# EUROPÄISCHE PATENTSCHRIFT

(11) **EP 1 102 619 B1**
(45) Veröffentlichungstag und Bekanntmachung des Hinweises auf die Patenterteilung: **21.04.2004**
(21) Anmeldenummer: 99948711.9
(22) Anmeldetag: 28.07.1999
(51) Int. Cl.: C01C 1/08, B01D 53/94, B01D 53/86, F01N 3/20, B01D 53/90

(54) **VERFAHREN ZUR UMSETZUNG VON HARNSTOFF IN AMMONIAK**
METHOD FOR CONVERTING UREA INTO AMMONIA
PROCEDE POUR CONVERTIR DE L'UREE EN AMMONIAC

(30) Priorität: 03.08.1998 DE 19834980
(43) Veröffentlichungstag der Anmeldung: 30.05.2001
(73) Patentinhaber: Argillon GmbH, 96257 Redwitz (DE)
(72) Erfinder: RUSCH, Klaus, D-96129 Strullendorf (DE); HOFMANN, Lothar, D-96264 Altenkunstadt (DE)
(74) Vertreter: Tergau & Pohl Patentanwälte
(86) Internationale Anmeldenummer: PCT/DE1999/002320
(87) Internationale Veröffentlichungsnummer: WO 2000/007695

(56) Entgegenhaltungen:
- EP-A- 0 487 886
- EP-A- 0 582 022
- EP-A- 0 848 985
- DE-A- 3 422 175
- DE-A- 19 510 804
- PATENT ABSTRACTS OF JAPAN vol. 015, no. 031 (C-0798), 24. Januar 1991 (1991-01-24) & JP 02 268811 A (HITACHI ZOSEN CORP), 2. November 1990 (1990-11-02)
- PATENT ABSTRACTS OF JAPAN vol. 015, no. 007 (C-0794), 9. Januar 1991 (1991-01-09) & JP 02 258017 A (BABCOCK HITACHI KK), 18. Oktober 1990 (1990-10-18)

## Beschreibung

Die Erfindung betrifft ein Verfahren zur Umsetzung von Harnstoff in Ammoniak mittels Anwendung von Mikrowellen.

In Anlagen zur selektiven katalytischen Entstickung (selective catalytic reduction = SCR) von Rauchgasen, insbesondere von Rauchgasen eines Kraftwerkes oder eines Dieselmotors, wird als Reduktionsmittel üblicherweise Ammoniak-Gas oder ein Ammoniak-Wasser-Gemisch verwendet. An einem sogenannten SCR-Katalysator werden dann die Stickoxide auch in Anwesenheit von Sauerstoff mit dem Reduktionsmittel Ammoniak in Stickstoff und Wasser umgesetzt. Der Transport, die Lagerung und die Handhabung von Ammoniak unterliegt strengen sicherheitstechnischen Vorschriften. Demgegenüber ist Harnstoff eine vergleichsweise harmlose Substanz. Den direkten Einsatz von Harnstoff als Reduktionsmittel in einem SCR-Reaktor steht das technische Problem der Hydrolyse, d. h. der Umwandlung von Harnstoff in Ammoniak, und der Eindüsung des Harnstoffs in den SCR-Reaktor entgegen.

Die Verwendung von Harnstoff in SCR-Reaktoren ist bisher nur bei Kleinanlagen, wie z.B. Blockheizkraftwerken oder bei Dieselmotoren bekannt, wobei eine direkte Eindüsung des Harnstoffes in den SCR-Reaktor in der Regel mit Unterstützung durch Druckluft erfolgt. Für ein System mit mehreren Düsen ist dabei der Harnstoffstrom für jede einzelne Düse zu regeln, was technisch aufwendig ist.

Zum Betreiben eines SCR-Katalysators zur Stickoxidverminderung offenbart die EP 0 487 886 A1 ein Verfahren, bei dem eine Harnstofflösung aus einem Behälter mittels einer Pumpe und einer Sprühvorrichtung auf Verdampferrohre eines Rohrenverdampfers in feinsten Tröpfchen aufgesprüht wird. Das dem Röhrenverdampfer entströmende Hydrolyse-Gemisch wird zur Vervollständigung der Hydrolyse mit einem nachgeschalteten Hydrolysekatalysator kontaktiert.

Der Erfindung liegt somit die Aufgabe zugrunde, Ammoniak zur Entstickung von Rauchgasen in möglichst einfacher und sicherheitstechnisch leicht zu handhabender Form bereitzustellen.

Die Aufgabe wird erfindungsgemäß durch die Merkmale des Anspruches 1 gelöst.

Der Kern der Erfindung besteht darin, in einem Hydrolyse-Reaktor unter Einsatz von Mikrowellen Harnstoff in Ammoniak umzusetzen, welcher nachfolgend zur Entstickung verwendet werden kann.

Weitere vorteilhafte Weiterbildungen der Erfindung ergeben sich aus den Unteransprüchen.

Ausführungsbeispiele der Erfindung werden anhand einer Zeichnung näher erläutert. Es zeigt:
- Fig. 1: einen Mikrowellen-Hydrolyse-Reaktor gemäß einem ersten Ausführungsbeispiel und
- Fig. 2: einen Mikrowellen-Hydrolyse-Reaktor gemäß einem zweiten Ausführungsbeispiel.

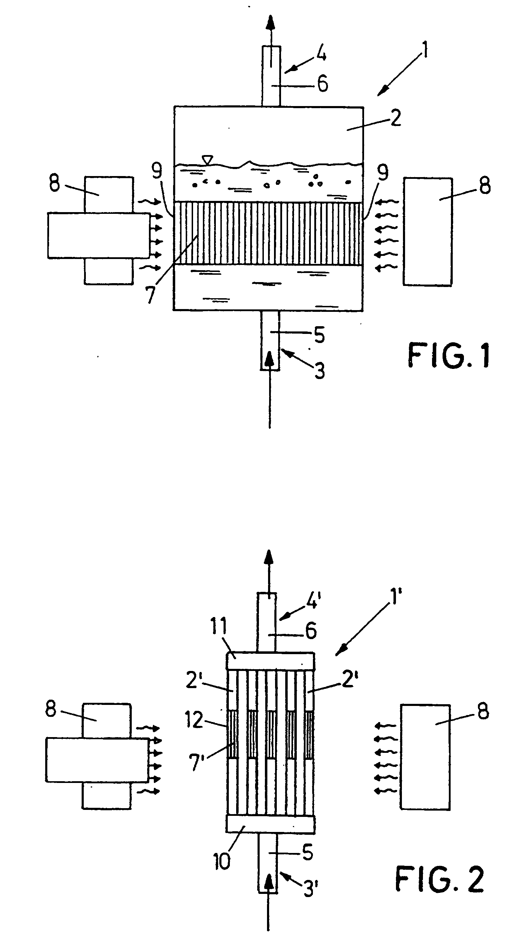

Ein Mikrowellen-Hydrolyse-Reaktor 1 gemäß einer ersten in Fig. 1 dargestellten Ausführungsform dient der Umsetzung von Harnstoff in Ammoniak im großtechnischen Rahmen. Der erzeugte Ammoniak wird einem SCR-Reaktor zugeführt, der Teil einer Rauchgas-Entstickungs-Anlage ist. In dem SCR-Reaktor werden im Rauchgas befindliche Stickstoffoxide zusammen mit Ammoniak in Gegenwart von Sauerstoff katalytisch zu Stickstoff und Wasser umgesetzt, wodurch die Stickstoffoxide entfernt werden.

Der Mikrowellen-Hydrolyse-Reaktor 1 weist eine Reaktions-Kammer 2 auf, welche mit Ausnahme einer Zuführ-Einrichtung 3 und einer Abführ-Einrichtung 4 allseitig geschlossen ist. Die Zuführ-Einrichtung 3 ist als mit der Reaktions-Kammer 2 verbundene Leitung 5 ausgebildet. Die Abführ-Einrichtung 4 ist als mit der Reaktions-Kammer 2 verbundene Leitung 6 ausgebildet.

Die Leitungen 5 und 6 sind an gegenüberliegenden Enden der Reaktions-Kammer 2 vorgesehen.

Zwischen der Zuführ-Einrichtung 3 und der Abführ-Einrichtung 4 ist innerhalb der Reaktions-Kammer 2 eine Katalysator-Einrichtung 7 vorgesehen, welche als Oberflächenkatalysator mit einer katalytisch aktiven Substanz ausgebildet ist. Diese kann in Form von schwamm- oder wabenförmigen Materialien oder in Form einer Schüttung vorgesehen sein. Als katalytisch aktive Substanz werden handelsübliche Produkte verwendet.
Im Bereich der Katalysator-Einrichtung 7 ist außerhalb der Reaktions-Kammer 2 eine Mikrowellen-Sende-Einrichtung 8 vorgesehen, welche Mikrowellen in die Reaktions-Kammer 2 einstrahlt. Zumindest im Bereich der Katalysator-Einrichtung 7 sind die Wände 9 der Reaktions-Kammer 2 mikrowellendurchlässig ausgebildet.

Beim Betrieb des Mikrowellen-Hydrolyse-Reaktors 1 wird durch die Zuführ-Einrichtung 3 eine wässrige Harnstoff-Lösung der Reaktions-Kammer 2 zugeführt. Die Lösung durchdringt die Katalysator-Einrichtung 7 und wird dort durch die Mikrowellen der Mikrowellen-Sende-Einrichtung 8 erhitzt. Durch die katalytisch aktive Substanz wird das Temperaturniveau und die aufzuwendende Energie herabgesetzt, bei der eine Hydrolyse des Harnstoffs unter Bildung von Ammoniak erfolgt. Dieser wird durch die Abführ-Einrichtung 4 zusammen mit Wasserdampf abgeführt. Dieses Gemisch kann dann in einem SCR-Reaktor zur Entstickung verwendet werden. Das katalytisch aktive Material ist für die Hydrolyse aktiv und kann z.B. auf TiO₂-Basis ausgeführt sein.

Durch die Kombination aus Katalysator, Mikrowellen und einer wässrigen Harnstoff-Lösung entstehen keine für die SCR-Anwendung des Ammoniaks unerwünschten Nebenprodukte wie Cyanursäure, Melamin oder dergleichen.

Eine zweite Ausführungsform ist in Fig. 2 dargestellt. Bezüglich der Beschreibung wird auf die erste Ausführungsform verwiesen. Identische Teile werden mit demselben Bezugszeichen bezeichnet. Verschiedene, jedoch funktionell gleichwertige Teile werden mit apostrophierten Bezugszeichen bezeichnet. Im folgenden werden lediglich die Unterschiede beschrieben.

Bei einem Mikrowellen-Hydrolyse-Reaktor 1' weist die Zuführ-Einrichtung 3' einen mit der Leitung 5 verbundenen Verteiler 10 auf. Die Abführ-Einrichtung 4' weist einen mit der Leitung 6 verbundenen Verteiler 11 auf. Zwischen dem Verteiler 10 und dem Verteiler 11 sind mehrere, z. B. fünf, Reaktions-Kammern 2' vorgesehen, welche als Kapillar-Rohre 12 ausgebildet sind. Diese sind endseitig mit den Verteilern 10, 11 zur Führung einer Flüssigkeit von der Zuführ-Einrichtung 3' zur Abführ-Einrichtung 4' verbunden. In den Kapillar-Rohren 12 sind Katalysator-Einrichtungen 7' vorgesehen. In einer besonderen Ausgestaltung sind die Kapillar-Rohre 12 aus katalytisch aktiver Substanz gebildet.

Hinsichtlich der Umsetzung der Harnstoff-Lösung in den Kapilar-Rohren 12 zu Ammoniak wird auf die Beschreibung des ersten Ausführungsbeispieles verwiesen.

## Patentansprüche

1. Verfahren zur Umsetzung von Harnstoff in Ammoniak, wobei
a) eine wässrige Harnstoff-Lösung zu einer Reaktions-Kammer (2, 2') geführt wird,
b) die wässrige Harnstoff-Lösung in der Reaktionskammer (2, 2') eine Katalysator-Einrichtung (7, 7') durchströmt,
c) in die Reaktionskammer (2, 2') zusätzlich Energie mittels Mikrowellen eingebracht wird, so dass in der Katalysator-Einrichtung (7,7') unter Einsatz der Mikrowellen Harnstoff katalytisch in Ammoniak und Wasser umgesetzt wird und
d) das entstandene Ammoniak-Wasser-Gemisch von der Reaktionskammer (2, 2') abgeführt wird.

2. Verfahren nach Anspruch 1,
wobei die wässrige Harnstoff-Lösung in der Katalysator-Einrichtung (7, 7') Kapillar-Rohre (12) durchströmt, die zumindest auf der Innenseite eine katalytisch aktive Substanz aufweisen.

3. Verfahren nach Anspruch 1,
wobei die Mikrowellen derart eingebracht werden, daß das Ammoniak zusammen mit Wasser in der Reaktionskammer (2, 2') verdampft.

4. Verfahren nach einem der Ansprüche 1 bis 3, wobei das Ammoniak-Wasser-Gemisch als Reduktionsmittel zur Entstickung einem Rauchgas zugemischt und mit dem Rauchgas einem SCR-Reaktor zugeführt wird.

## Claims

1. Method for converting urea into ammonia, wherein
a) an aqueous urea solution is conducted to a reaction chamber (2, 2'),
b) in the reaction chamber (2, 2') the aqueous urea solution flows through a catalytic-converter device (7, 7'),
c) in addition energy is introduced into the reaction chamber (2, 2') by means of microwaves so that in the catalytic-converter device (7, 7') urea is catalytically converted into ammonia and water with the use of the microwaves,
d) the resultant ammonia-water mixture is removed from the reaction chamber (2, 2').

2. Method according to claim 1, wherein in the catalytic-converter device (7, 7') the aqueous urea solution flows through capillary tubes (12) which at least on the inside have a catalytically active substance.

3. Method according to claim 1, wherein the microwaves are introduced in such a way that the ammonia evaporates together with water in the reaction chamber (2, 2').

4. Method according to one of claims 1 to 3, wherein the ammonia-water mixture as a reducing agent for the removal of nitrogen is admixed to an exhaust gas and with the exhaust gas is fed to an SCR-reactor.

## Revendications

1. Procédé de conversion d'urée en ammoniac, dans lequel
a) on envoie une solution aqueuse d'urée à une chambre (2, 2' de réaction,
b) on fait passer la solution aqueuse d'urée de la chambre (2, 2') de réaction dans un dispositif (7, 7') à catalyseur.
c) on introduit dans la chambre (2, 2') de réaction, en plus de l'énergie au moyen de microondes, de sorte que de l'urée est transformée catalytiquement en ammoniac et en eau dans le dispositif (7, 7') à catalyseur avec mise en oeuvre des microondes, et
d)on évacue le mélange d'ammoniac et d'eau formés de la chambre (2, 2'é) de réaction.

2. Procédé suivant la revendication 1,
dans lequel on fait passer la solution aqueuse d'urée du dispositif (7, 7') à catalyseur dans des tubes (12) capillaires qui ont au moins du côté intérieur une substance active du point de vue catalytique.

3. Procédé suivant la revendication 1, dans lequel on introduit les microondes de façon à ce que l'ammoniac s'évapore ensemble avec l'eau dans la chambre (2, 2') de réaction.

4. Procédé suivant l'une des revendications 1 à 3, dans lequel on ajoute au mélange d'ammoniac, et d'eau comme agent réducteur pour la dénitrification, un gaz de carneau et on l'envoie avec le gaz de cameau à un réacteur de réduction catalytique sélective.
